Europäisches Patentamt

European Patent Office

Office européen des brevets

(19)

(11) Veröffentlichungsnummer : **0 135 067**
**B1**

(12)    # EUROPÄISCHE PATENTSCHRIFT

(45) Veröffentlichungstag der Patentschrift :
22.10.86

(21) Anmeldenummer : 84108869.3

(22) Anmeldetag : 26.07.84

(51) Int. Cl.⁴ : **B 01 J   6/00, C 04 B   2/10//**
**C01F7/44**

(54) Verfahren und Anlage zur Wärmebehandlung von feinkörnigem Gut.

(30) Priorität : 12.08.83 DE 3329233

(43) Veröffentlichungstag der Anmeldung :
27.03.85 Patentblatt 85/13

(45) Bekanntmachung des Hinweises auf die Patenterteilung : 22.10.86 Patentblatt 86/43

(84) Benannte Vertragsstaaten :
AT BE DE FR GB

(56) Entgegenhaltungen :
CH-A-   361 751
GB-A- 1 301 758
US-A- 2 375 487

(73) Patentinhaber : Krupp Polysius AG
Graf-Galen-Strasse 17
D-4720 Beckum (DE)

(72) Erfinder : Butschko, Gerhard, Irmin, Ernst
Konradstrasse 39
D-4700 Hamm 1 (DE)

(74) Vertreter : Tetzner, Volkmar, Dr.-Ing. Dr. Jur.
Van-Gogh-Strasse 3
D-8000 München 71 (DE)

EP 0 135 067 B1

**Beschreibung**

Die Erfindung betrifft ein Verfahren zur Wärmebehandlung von feinkörnigem Gut entsprechend dem Oberbegriff des Anspruches 1, weiterhin eine Anlage zur Durchführung dieses Verfahrens.

Bei der Wärmebehandlung von feinkörnigem Gut, beispielsweise beim Calcinieren, Brennen oder Sintern von Dolomit, Magnesit, Kalk, Aluminiumhydroxid usw., gelangt das in der Hochtemperaturzone behandelte Gut durch ein Austragsorgan (beispielsweise in eine Zellenradschleuse oder eine Pendelklappe) in die Kühlzone, in der das Gut mittels eines Luftstromes gekühlt wird, der anschließend der Hochtemperaturzone zugeführt wird. Das genannte Austragsorgan dient somit als Schleuse, die einen Durchtritt des heißen Gutes aus der Hochtemperaturzone in die Kühlzone gestattet, ein unmittelbares Hindurchströmen von Kühlluft aus der Kühlzone in die Hochtemperaturzone dagegen verhindert.

Je nach der in der Hochtemperaturzone zum Calcinieren, Brennen bzw. Sintern des feinkörnigen Gutes erforderlichen Temperatur (die vielfach bis zu etwa 1 100 °C beträgt) ergibt sich eine entsprechend hohe thermische Belastung des mit diesem Gut in Berührung kommenden Austragsorganes, was zu einer unerwünschten Verringerung der Standfestigkeit bzw. Lebensdauer des Austragsorganes führen kann.

Man könnte nun daran denken, zur Verringerung der thermischen Belastung des Austragsorganes das in der Hochtemperaturzone abgeschiedene Gut mittels eines Kühlluft-Teilstromes vorzukühlen, ehe es in Berührung mit dem Austragsorgan kommt und in die eigentliche Kühlzone gelangt. Mit einer solchen Verfahrensweise wäre jedoch der wesentliche Nachteil verbunden, daß der in den Abscheider der Hochtemperaturzone eingeführte Kühlluft-Teilstrom zusammen mit dem Abgas der Hochtemperaturzone als Ballast durch die Vorwärmzone geführt werden müßte, was die Wärmeausnutzung der Abgase der Hochtemperaturzone zur Vorwärmung des feinkörnigen Gutes erheblich beeinträchtigen würde.

Beim Brennen von Zement in Anlagen, die aus einem Drehrohrofen und einem nachgeschalteten Kühler bestehen, ist es ferner bekannt, das aus dem Kühler ausgetragene Gut einer Trennvorrichtung (beispielsweise einem Sieb) zuzuleiten (GB-A-1 301 758, US-A-2 375 487). Die durch diese Trennvorrichtung abgetrennten großen Klinkerstücke werden anschließend durch einen Brecher zerkleinert und erneut dem Eingang des Kühlers zugeführt. Auf diese Weise soll auch eine wirksame Kühlung der großen Klinkerstücke erreicht werden.

Der Erfindung liegt die Aufgabe zugrunde, ein Verfahren der im Oberbegriff des Anspruches 1 vorausgesetzten Art so auszubilden, daß ohne wärmetechnische Nachteile eine wesentliche Verringerung der thermischen Belastung des Austragsorganes und damit eine Erhöhung seiner Standfestigkeit erreicht wird.

Diese Aufgabe wird erfindungsgemäß durch das kennzeichnende Merkmal des Anspruches 1 gelöst.

Indem bei dem erfindungsgemäßen Verfahren dem in der Hochtemperaturzone behandelten Gut vor dem Austragsorgan ein Teilstrom des bereits in der Kühlzone gekühlten Gutes zugemischt wird, erreicht man eine Absenkung der Temperatur des mit dem Austragsorgan in Berührung kommenden Gutes und damit eine Verringerung der thermischen Belastung und des Verschleißes dieses Austragsorganes. Dieser Vorteil wird erfindungsgemäß erreicht, ohne daß die Abgasmenge der Hochtemperaturzone vergrößert und dadurch deren wärmetechnischer Wirkungsgrad für die Vorwärmung des Gutes verschlechtert wird.

Ein weiterer wesentlicher Vorteil des erfindungsgemäßen Verfahrens besteht in der Verbesserung der Produkt-Qualität in Fällen, in denen ein besonders niedriger Rest-$CO_2$-Gehalt des calcinierten Materiales erreicht werden soll. Erfolgt nämlich die Kühlung von sehr reaktivem, calciniertem Gut ausschließlich mit Luft, so nimmt das Gut vor allem bei den zu Beginn der Kühlung herrschenden hohen Temperaturen in starkem Maße $CO_2$ aus der Kühlluft auf. Dieser unerwünschte Effekt wird erfindungsgemäß vermieden, indem die Vorkühlung des in der Hochtemperaturzone behandelten, besonders reaktiven Gutes nicht mit Luft, sondern mit einem Teilstrom des bereits in der Kühlzone gekühlten Gutes erfolgt. Auf diese Weise wird die Temperatur des calcinierten Gutes in einen weniger kritischen Bereich abgesenkt, ehe das Gut mit Kühlluft in Berührung kommt.

Zweckmäßige Ausgestaltungen der Erfindung sind Gegenstand der Unteransprüche und werden im Zusammenhang mit der Beschreibung zweier Ausführungsbeispiele näher erläutert.

In der Zeichnung zeigen

Figur 1 ein erstes Ausführungsbeispiel einer Anlage zur Durchführung des erfindungsgemäßen Verfahrens;

Figur 2 ein Detail aus der Anlage gemäß Fig. 1;

Figur 3 ein zweites Ausführungsbeispiel einer Anlage zur Durchführung des erfindungsgemäßen Verfahrens;

Figur 4 ein Detail aus der Anlage gemäß Fig. 3.

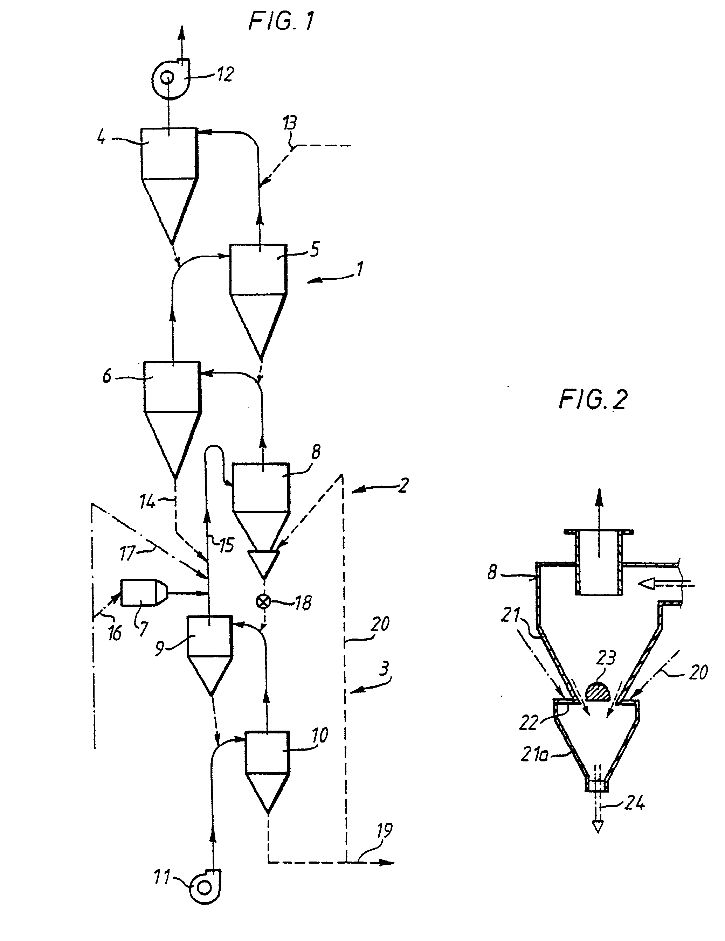

Die in den Fig. 1 und 2 dargestellte Anlage zur Wärmebehandlung von feinkörnigem Gut enthält einen mehrstufigen Zyklonwärmetauscher mit einer Vorwärmzone 1, einer Hochtemperaturzone (beispielsweise Calcinierzone) 2 und einer Kühlzone 3.

Die Vorwärmzone 1 enthält Zyklone 4, 5 und 6, die Hochtemperaturzone 2 eine Brennkammer 7 sowie einen Zyklon 8 und die Kühlzone 3 Zyklone 9 und 10.

Die genannten Bauteile sind in der aus Fig. 1 ersichtlichen Weise über ihre Gas- und Gutleitungen miteinander verbunden. Ein durch einen Ventilator 11 zugeführter Kühlluftstrom durchsetzt nacheinander die Zyklone 10 und 9 und gelangt dann als Verbrennungsluft in die Hochtemperaturzone 2. Die den Zyklon 8 verlassenden Abgase der Hochtemperaturzone 2 durchsetzen dann die Zyklone 6, 5 und 4 der Vorwärmzone 1 und werden durch einen Ventilator 12 abgeführt.

Das feinkörnige Gut wird bei 13 aufgegeben, durchsetzt dann in bekannter Weise die Zyklone 4, 5 und 6 der Vorwärmzone 1 und wird bei 14 in die zum Zyklon 8 führende Steigleitung 15 eingetragen, in der die eigentliche Hochtemperaturbehandlung des vorgewärmten Gutes erfolgt. Zu diesem Zweck kann Brennstoff nicht nur (bei 16) der Brennkammer 7 zugeleitet werden (deren Heißgase dann in die Steigleitung 15 eintreten), sondern auch (bei 17) direkt in die Steigleitung 15 eingeführt werden.

Im Zyklon 8 wird das in der Hochtemperaturzone behandelte Gut aus dem Gasstrom abgeschieden und gelangt über ein beispielsweise als Zellenradschleuse ausgebildetes Austragsorgan 18 in die Kühlzone und wird schließlich (bei 19) als Fertiggut abgeführt.

Erfindungsgemäß wird nun ein Teilstrom 20 des in der Kühlzone 3 gekühlten Gutes zum Zyklon 8 zurückgeführt, um hier das im Zyklon 8 abgeschiedene Gut zu kühlen, ehe es in Berührung mit dem Austragsorgan 18 kommt.

Fig. 2 veranschaulicht eine konstruktive Lösung zur Kühlung des im Zyklon 8 abgeschiedenen heißen Gutes mit einem Teilstrom des bereits gekühlten Gutes. An den Gutaustragtrichter 21 des Zyklons 8 schließt sich ein gleichfalls trichterförmiger Fortsatz 21a an, wobei zwischen dem Austragtrichter 21 und dem Fortsatz 21a eine Stufe vorhanden ist, in der sich eine ringförmige Eintragsöffnung 22 befindet, durch der zuzumischende Teilstrom 20 des bereits gekühlten Gutes eintritt. Am unteren Ende des Austragtrichters 21 befindet sich ein Staukörper 23, der ein unmittelbares Durchschießen des im Zyklon 8 abgeschiedenen Gutes verhindert und zusammen mit der ringförmigen Einführung des zuzumischenden Teilstromes 20 eine gute Vermischung des heißen und des bereits gekühlten Gutes innerhalb des Fortsatzes 21a des Zyklones 8 gewährleistet. Das am unteren Ende des Fortsatzes 21a austretende gemischte Gut 24 besitzt infolgedessen eine deutlich geringere Mischtemperatur als das im Zyklon 8 abgeschiedene heiße Gut und kann infolgedessen das Austragsorgan 18 nicht in unerwünschter Weise thermisch belasten.

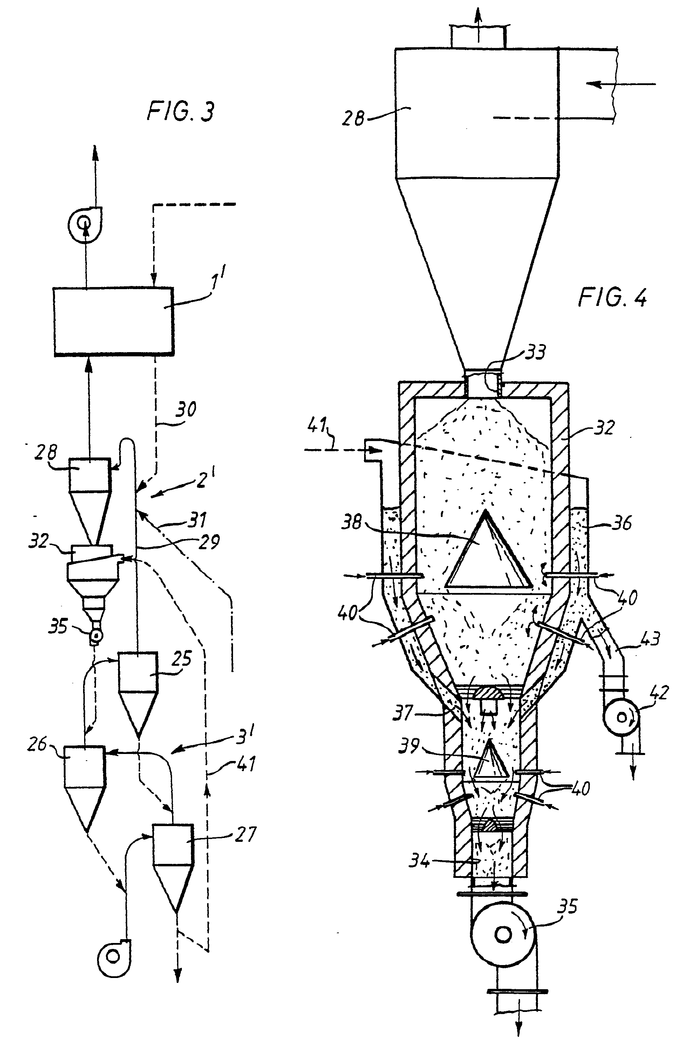

Die in den Fig. 3 und 4 als zweites Ausführungsbeispiel der Erfindung dargestellte Anlage enthält eine Vorwärmzone 1', eine Hochtemperaturzone 2' und eine Kühlzone 3'.

Die Kühlzone 3' enthält Zyklone 25, 26 und 27. Zur Hochtemperaturzone 2' gehört die vom Zyklon 25 zum Zyklon 28 führende Steigleitung 29, in die bei 30 das in der Vorwärmzone 1' vorgewärmte Gut aufgegeben wird und der außerdem (bei 31) Brennstoff und/oder Heizgas zugeführt wird.

Zwischen dem Zyklon 28 der Hochtemperaturzone 2' und der Kühlzone 3' ist weiterhin ein Verweilbehälter 32 vorgesehen, dessen Einzelheiten aus Fig. 4 ersichtlich sind. Dieser Verweilbehälter 32 besitzt im oberen Bereich eine Eintragsöffnung 33 für das in der Hochtemperaturzone behandelte, im Zyklon 28 abgeschiedene heiße Gut und im unteren Bereich eine Austragsöffnung 34 für das der Kühlzone 3' über das Austragsorgan 35 zuzuführende Gut.

Der Verweilbehälter 32 weist ferner einen zur Aufnahme von gekühltem Gut dienenden Ringmantel 36 auf, der an seinem unteren Ende über eine Eintragsöffnung 37 mit dem Innenraum des Verweilbehälters 32 in Verbindung steht. Im oberen, im Durchmesser größeren Teil des Verweilbehälters 32 ist ein Staukonus 38 angeordnet. Ein weiterer kleinerer Staukonus 39 ist im unteren, im Durchmesser kleineren Teil des Verweilbehälters 32 angeordnet. Weiterhin ist der Verweilbehälter 32 mit einer Anzahl von Zuführungen 40 für ein Belüftungsmedium versehen.

Die Funktion der Anlage gemäß den Fig. 3 und 4 entsprechend dem erfindungsgemäßen Verfahren dürfte nach den obigen Erläuterungen verständlich sein. Um die thermische Belastung des zwischen dem Verweilbehälter 32 und dem Zyklon 25 der Kühlzone 3' vorgesehenen Austragsorgan 35 zu verringern, wird eine Teilmenge 41 des bereits gekühlten, den Zyklon 27 verlassenden Gutes zum Verweilbehälter 32 zurückgeführt und dort mit dem aus dem Zyklon 28 der Hochtemperaturzone 2' ausgetragenen, heißen Gut vermischt. Dabei kann gewünschtenfalls ein Teil des in den Ringmantel 36 des Verweilbehälters 32 eingetragenen, gekühlten Gutes über eine mit einem Austragsorgan 42 versehene Leitung 43 abgezogen werden, um die mit dem heißen Gut zu vermischende Teilmenge des bereits gekühlten Gutes auf den gewünschten Wert einzustellen, jedoch eine vergrößerte Kühlwirkung (durch die Wandung des Verweilbehälters 32) auszuüben. Es versteht sich, daß gewünschtenfalls auch die gesamte, den Zyklon 27 der Kühlzone 3' verlassende Gutmenge zum Verweilbehälter 32 zu Kühlzwecken zurückgeführt werden kann, wobei jedoch zweckmäßig nur ein Teilstrom des gekühlten Materiales mit dem heißen Gut vermischt, die übrige Teilmenge dagegen als Fertiggut abgezogen wird.

Weiterhin sei erwähnt, daß es im Rahmen der Erfindung möglich ist, die Kühlung des heißen Gutes durch mehrfaches Teilen und anschließendes Zusammenführen der beiden Gutströme zu intensivieren.

Zur weiteren Erläuterung sei das erfindungsgemäße Verfahren dem üblichen Verfahren anhand eines Beispieles gegenübergestellt. Das Beispiel bezieht sich auf die Wärmebehandlung von Aluminiumhydroxid in einer Anlage gemäß den Fig. 1 und 2.

### Herkömmliche Betriebsweise

Das zu behandelnde Material verläßt die Vorwärmzone 1 (mit den Zyklonen 4, 5 und 6) über die Gutleitung 14 mit einer Temperatur von etwa 500 °C, gelangt dann in die Hochtemperaturzone (Calcinierzone) 2 und wird hier nach Erreichen einer Temperatur von ca. 1 150 bis 1 250 °C aus dem Zyklon 8 über das Austragsorgan 18 der Kühlzone 3 aufgegeben. Durch den vom Ventilator 11 zugeführten Kühlluftstrom wird das Gut in den Zyklonen 9 und 10 auf eine Temperatur von ca. 200 bis 250 °C abgekühlt. Bei dieser herkömmlichen Betriebsweise wird demnach das Austragsorgan 18 ständig einer Temperatur von 1 150 bis 1 250 °C ausgesetzt.

### Erfindungsgemäße Betriebsweise

Das Verfahren ist bis auf die Zirkulation von gekühltem Gut identisch mit der vorstehend beschriebenen herkömmlichen Betriebsweise. Die Temperatur des im Zyklon 8 abgeschiedenen Gutes vor Eintritt in den Fortsatz 21a des Trichters 21 beträgt 1 150 bis 1 250 °C. Die Temperatur des rückgeführten Teilstromes 20 des Gutes beträgt ca. 200 bis 250 °C. Zur Einstellung einer für den Schutz des Austragsorganes 18 gewünschten maximalen Temperatur des gemischten Gutes 24 ist eine Rückgutmenge (Teilstrom 20) von ca. 40 % der im Zyklon 8 abgeschiedenen Gutmenge erforderlich. Die Mischguttemperatur vor dem Austragsorgan 18 beträgt hierbei beispielsweise ca. 850 °C. Eine zusätzliche Mischeinrichtung ist dabei nicht erforderlich. Die Wärmeverluste sind äußerst gering, da der für den Calcinierprozeß rückgewinnbare Wärmeinhalt des Mischgutes gleich groß ist wie der des Gutes im Zyklon.

Beim Betrieb einer Anlage entsprechend den Fig. 3 und 4 wirkt sich der zwischen der Hochtemperaturzone (Calcinierzone) 2' und der Kühlzone 3' vorgesehene Verweilbehälter 32 sehr vorteilhaft aus, da das Gut zur Erreichung einer bestimmten Verweilzeit durch das Austragsorgan 35 gestaut wird. Dieses Austragsorgan 35 braucht bei dem erfindungsgemäßen Verfahren nicht zusätzlich gekühlt zu werden. Es kann aus marktgängigen legierten Stählen hergestellt werden, was die Durchführung eines Calcinierprozesses mit Temperaturen von beispielsweise über 1 200 °C erst ermöglicht.

### Patentansprüche

1. Verfahren zur Wärmebehandlung von feinkörnigem Gut in einem mehrstufigen Zyklonwärmetauscher, enthaltend eine Vorwärmzone, eine Hochtemperaturzone und eine Kühlzone, wobei das in der Hochtemperaturzone behandelte Gut durch ein Austragsorgan in die Kühlzone gelangt, in der es mittels eines Luftstromes gekühlt wird, der anschließend der Hochtemperaturzone zugeführt wird, dadurch gekennzeichnet, daß dem in der Hochtemperaturzone behandelten Gut vor dem Austragsorgan ein Teilstrom des bereits in der Kühlzone gekühlten Gutes zugemischt wird.

2. Verfahren nach Anspruch 1, bei dem das in der Hochtemperaturzone behandelte Gut zunächst in eine Verweilzone gelangt und aus dieser Verweilzone durch ein Austragsorgan der Kühlzone zugeführt wird, dadurch gekennzeichnet, daß dem die Verweilzone verlassenden Gut vor dem Austragsorgan ein Teilstrom des bereits in der Kühlzone gekühlten Gutes zugemischt wird.

3. Anlage zur Durchführung des Verfahrens nach Anspruch 1, enthaltend einen Zyklon zur Abscheidung des in der Hochtemperaturzone behandelten Gutes, dadurch gekennzeichnet, daß der Gutaustragstrichter (21) dieses Zyklons (8) eine vorzugsweise ringförmige Eintragsöffnung (22) für den zuzumischenden Teilstrom (20) des gekühlten Gutes aufweist.

4. Anlage zur Durchführung des Verfahrens nach den Ansprüchen 1 und 2, enthaltend einen zwischen der Hochtemperaturzone (2') und der Kühlzone (3') angeordneten Verweilbehälter (32) mit einer im oberen Bereich vorgesehenen Eintragsöffnung (33) für das in der Hochtemperaturzone behandelte Gut und eine im unteren Bereich vorgesehene Austragsöffnung (34) für das der Kühlzone zuzuführende Gut, dadurch gekennzeichnet, daß vorzugsweise im unteren Teil des Verweilbehälters eine vorzugsweise ringförmige Eintragsöffnung (37) für den zuzumischenden Teilstrom (41) des gekühlten Gutes vorgesehen ist.

5. Anlage nach Anspruch 4, dadurch gekennzeichnet, daß der Verweilbehälter (32) einen zur Aufnahme von gekühltem Gut dienenden Ringmantel (36) aufweist, der an seinem unteren Ende über die Eintragsöffnung (37) mit dem Innenraum des Verweilbehälters in Verbindung steht.

### Claims

1. Method of heat treatment of fine-grained material in a multi-stage cyclone heat exchanger, containing a pre-heating zone, a high-temperature zone and a cooling zone, in which the material treated in the high-temperature zone passes through a discharge device to enter the cooling zone in which it is cooled by means of an air stream which is then delivered to the high-temperature zone, characterised in that before the discharge device a branch stream of the material which has already been cooled in the cooling zone is mixed with the material treated in the high-temperature zone.

2. Method as claimed in claim 1, in which the material treated in the high-temperature zone then passes to a resting zone and from this resting zone is delivered through a discharge device to the cooling zone, characterised in that before the discharge device a branch stream of the material which has already been cooled in the cooling zone is mixed with the material leaving the resting zone.

3. Apparatus for carrying out the method as claimed in claim 1, containing a cyclone for the separation of the material treated in the high-temperature zone, characterised in that the material discharge hopper (21) of this cyclone (8) has a preferably annular inlet opening (22) for the branch stream of cooled material which is to be mixed in.

4. Apparatus for carrying out the method as claimed in claims 1 and 2, containing a resting vessel (32) which is arranged between the high-temperature zone (2') and the cooling zone (3') and has an inlet opening (33) provided in the upper zone for the material treated in the high-temperature zone and a discharge opening (34) provided in the lower region for the material to be delivered to the cooling zone, characterised in that a preferably annular inlet opening (37) for the branch stream (41) of cooled material to be mixed in is provided preferably in the lower part of the resting vessel.

5. Apparatus as claimed in claim 4, characterised in that the resting vessel (32) has an annular casing (36) which serves to receive cooled material and is connected at its lower end to the interior of the resting vessel by the inlet opening (37).

**Revendications**

1. Procédé de traitement thermique de matière à granulométrie fine dans un échangeur de chaleur à plusieurs étages à cyclones, comprenant une zone de réchauffage, une zone à température élevée et une zone de refroidissement, la matière traitée dans la zone à température élevée parvenant par l'intermédiaire d'un organe de décharge dans la zone de refroidissement dans laquelle elle subit ce dernier au moyen d'un courant d'air qui est ensuite dirigé sur la zone à température élevée, caractérisé en ce que la matière traitée dans la zone à température élevée est mélangée en amont de l'organe de décharge à un courant partiel de matière ayant déjà passé dans la zone de refroidissement.

2. Procédé selon la revendication 1, dans lequel la matière traitée dans la zone à température élevée parvient tout d'abord dans une zone d'emmagasinage, puis est dirigé de cette dernière par un organe de décharge sur la zone de refroidissement, caractérisé en ce que la matière quittant la zone d'emmagasinage est mélangée en amont de l'organe de décharge avec un courant partiel de la matière ayant déjà passé dans la zone de refroidissement.

3. Installation pour la mise en œuvre du procédé selon la revendication 1, comprenant un cyclone de séparation de la matière traitée dans la zone à température élevée, caractérisée en ce que la trémie (21) de décharge de la matière de ce cyclone (8) comprend un orifice de préférence annulaire (22) d'admission du courant partiel (20) de la matière refroidie et devant faire partie du mélange.

4. Installation pour la mise en œuvre du procédé selon les revendications 1 et 2, comprenant une cuve d'emmagasinage (32) disposée entre la zone (2') à température élevée et la zone (3') de refroidissement et comportant à la partie supérieure un orifice (33) d'admission de la matière traitée dans la zone à température élevée et, à la partie inférieure, un orifice (34) de décharge de la matière devant être dirigé sur la zone de refroidissement, caractérisée en ce qu'un orifice de préférence annulaire (37) d'admission du courant partiel (41) de la matière refroidie devant faire partie du mélange est prévu de préférence à la partie inférieure de ladite cuve d'emmagasinage.

5. Installation selon la revendication 4, caractérisée en ce que la cuve d'emmagasinage (32) comprend une enveloppe annulaire (36) destinée à loger de la matière refroidie et communiquant à la partie inférieure, par un orifice d'admission (37), avec le volume interne de ladite cuve d'emmagasinage.

FIG. 1

FIG. 2

*FIG. 3*

*FIG. 4*